# DEMANDE DE BREVET EUROPEEN

(11) **EP 0 834 983 A2**
(43) Date de publication de la demande: **08.04.1998**
(21) Numéro de dépôt: 97402013.3
(22) Date de dépôt: 27.08.1997
(51) Int. Cl.: H02M 7/5387

(54) **Dispositif de mesure de courants dans un ondulateur**

(30) Priorité: 09.09.1996 FR 9611175
(71) Demandeur: SCHNEIDER ELECTRIC SA, 92100 Boulogne Billancourt (FR)
(72) Inventeur: Bonsigneur, Eric, 78420 Carrieres Sur Seine (FR); Nguyen Phuoc, Vinh T., 92100 Boulogne Billancourt (FR)

(57) **Abrégé**

La présente invention concerne un dispositif de mesure de courants équipant un onduleur (1) alimenté par une source de tension continue et pourvu de six interrupteurs (T1, T2, T3, T4, T5, T6) associés à des diodes (D1, D2, D3, D4, D5, D6) et pilotés par un circuit de commande (2) et un microcontrôleur (3) et pourvu de capteurs de courant (Su, Sv, Sw) disposés chacun entre l'interrupteur et la diode associée d'une voie basse et d'autre part le conducteur de retour de la source de tension continue et fournissant des signaux dit "direct" (Isu, Isv, Isw) en phase avec les courants (la, Ib, Ic) sortant de l'onduleur, et caractérisé par le fait qu'il comporte des moyens (A46, A62) pour calculer un signal de remplacement (lai) dit "indirect" égal à la somme de deux signaux "directs" (-Isu et -Isw) et un second signal de remplacement (Ici) dit "indirect" égal est à la somme de deux signaux "directs" (-Isu et -Isw) et des moyens (Cu, Cw) pour commuter soit un signal "direct" (Isu ou Isw) soit un signal de remplacement "indirect" (lai ou Ici) de manière à envoyer au microcontrôleur (3) deux signaux reconstruits des courants de deux phases (la* et lc*) composés chacun soit du signal "direct" (Isu ou Isw) soit, pendant les pas de MLI où le transistor de la branche basse n'est pas commandé, du signal de remplacement "indirect" (lai, Ici).

## Description

La présente invention se rapporte à un dispositif de mesure de courants dans un onduleur pourvu d'interrupteurs pilotés par un circuit de commande et alimenté par une source de tension continue.

On utilise un convertisseur de fréquence pour, à partir du réseau alternatif, commander un moteur, sous'une fréquence et une tension variables. Un tel convertisseur de fréquence se compose d'une source de tension continue (étage redresseur) qui alimente, après filtrage, un onduleur de tension. L'onduleur comporte des "interrupteurs" (par exemple des transistors IGBT) qui sont commandés par un circuit de contrôle à microcontrôleur selon une technique appelée modulation de largeur d'impulsions (ou encore MLI) délivrant au moteur une suite d'impulsions d'amplitude fixe et modulées en largeur. Les instants de fermeture des transistors sont fixés par les intersections d'une onde de référence sinusoïdale représentant la tension de sortie d'une phase et d'une onde de modulation triangulaire.

Dans un convertisseur de fréquence, on a besoin de mesurer le courant, dans les phases pour réguler la vitesse et pour assurer la protection contre les sur-courants et les court-circuits. On connaît plusieurs méthodes de mesure du courant. Un première méthode consiste à placer des capteurs à effet Hall ou des shunts avec amplificateurs d'isolement directement sur les phases. Une seconde méthode consiste à placer un seul shunt sur le conducteur de retour de la source de tension continue et à "reconstruire" les courants de sortie dans les phases. Une troisième méthode consiste à placer trois shunts sur les branches basses de l'onduleur et à "reconstruire" les courants de sortie dans les phases, à partir des mesures de tension aux bornes des trois shunts.

Les méthodes de mesure connues utilisant trois shunts dans les branches basses ne sont pas totalement satisfaisantes particulièrement à haute vitesse et en mode défluxé.

La présente invention a pour but de fournir un dispositif apte à assurer la reconstruction complète des courants de sortie, dans tous les cas de fonctionnement du convertisseur, de manière simple et économique, ce dispositif fonctionnant à partir de trois shunts ou capteurs de courant montés sur les branches basses de l'onduleur. Ce dispositif ne nécessite pas d'isolation galvanique et ne nécessite pas de traitement numérique compliqué.

Le dispositif de mesure de courants selon l'invention équipe un onduleur alimenté par une source de tension continue et pourvu de six interrupteurs associés à des diodes et pilotés par un circuit de commande et un microcontrôleur et pourvu de capteurs de courant disposés chacun entre l'interrupteur et la diode associée d'une voie basse et d'autre part le conducteur de retour de la source de tension continue et fournissant des signaux dit "direct" en phase avec les courants sortant de l'onduleur et il est essentiellement caractérisé par le fait qu'il comporte des moyens pour calculer un signal de remplacement dit "indirect" égal à la somme de deux signaux "directs" et un second signal de remplacement dit "indirect" égal est à la somme de deux signaux "directs" et des moyens pour commuter soit un signal "direct" soit un signal de remplacement "indirect" de manière à envoyer au microcontrôleur deux signaux reconstruits des courants de deux phases composés chacun soit du signal "direct" soit, pendant les pas de MLI où le transistor de la branche basse n'est pas commandé, du signal de remplacement "indirect".

Selon une caractéristique, les moyens pour commuter les signaux "directs" ou les signaux "indirects" sont constitués par des commutateurs pilotés par un circuit logique recevant les commandes des transistors des voies basses.

L'invention va maintenant être décrite avec plus de détail en se référant à un mode de réalisation donné à titre d'exemple et illustré par les dessins annexés sur lesquels:
- la figure 1 est un schéma d'un onduleur équipé du dispositif de mesure de courants selon l'invention;
- la figure 2 est un schéma fonctionnel du circuit analogique équipant le dispositif de mesure de courants;
- la figure 3 est un schéma fonctionnel du circuit logique équipant le dispositif de reconstruction de courants;
- la figure 4 est un diagramme illustrant le séquencement de la reconstruction des courants;
- la figure 5 illustre comparativement le courant réel et le courant reconstruit dans la phase U (figures 5a et 5b) et dans la phase W (figures 5c et 5d);
- la figure 6 illustre les commandes de la branche directe et de la branche indirecte du dispositif.

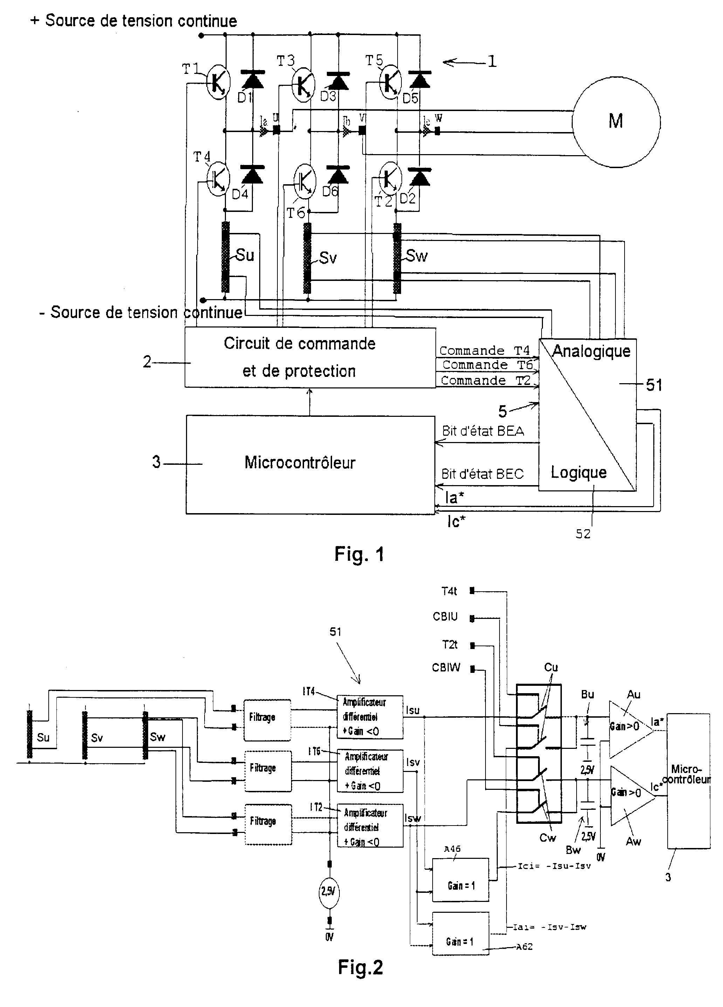

La figure 1 montre un onduleur de tension 1 équipé du dispositif de mesure de courants selon l'invention et alimenté aux bornes positive et négative d'une source de tension continue.

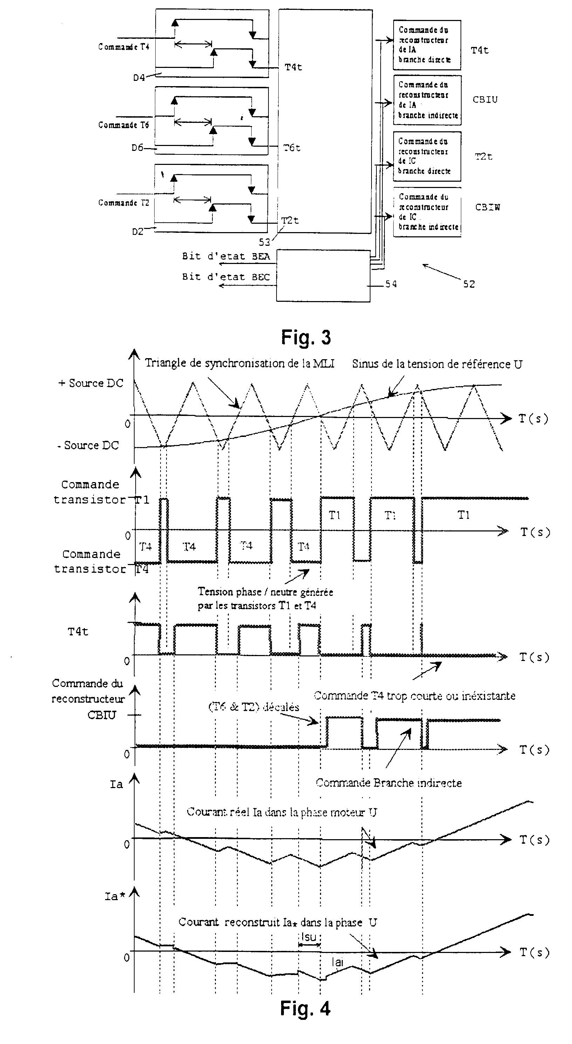

Cet onduleur de tension 1 est pourvu "d'interrupteurs" T1 à T6, ici des transistors de type IGBT, associés à des diodes D1 à D6. Les transistors T1 à T6 sont commandés par un circuit de commande 2 et par un microcontrôleur 3 de manière à délivrer au moteur M, sur les phases U, V, W, une suite d'impulsions d'amplitude fixe et modulées en largeur (modulation de largeur d'impulsions ou MLI). En se référant à la figure 4, on verra que les instants de fermeture des transistors T1 à T6 sont déterminés par les intersections d'une onde sinusoïdale de référence représentant la tension de sortie d'une phase et d'une onde de modulation triangulaire. Les courants réels sont notés la (phase U), Ib (phase V) et Ic (phase W).

L'onduleur 1 comporte trois shunts ou capteurs de courant Su, Sv, Sw qui sont montés chacun entre d'une part un couple formé d'un transistor et de la diode de roue libre associée d'une voie basse et d'autre part le conducteur de retour de la source de tension continue. Le signe de la tension aux bornes d'un shunt Su ou Sv ou Sw est inverse du signe du courant qui traverse ce shunt.

Les tensions aux bornes des shunts Su, Sv, Sw sont envoyées sur un circuit analogique 51 d'un circuit 5 de reconstruction des courants . Elles sont appliquées à des filtres puis à des amplificateurs IT4, IT6, IT2 respectivement. Les signaux Isu (phase U), Isv (phase V) et Isw (phase W) sortant des amplificateurs IT4, IT6, IT2 représentent les images des courants de phase Ia, Ib, Ic, respectivement. Les amplificateurs IT4, IT6, IT2 ont un gain négatif pour remettre en phase les tensions Isu, Isv, Isw respectivement avec les courants traversant les shunts.

On considère que le moteur M est équilibré et que par conséquent la somme des courants réels Ia, Ib et Ic est égale à 0.

Les signaux de sortie Isu et Isv des amplificateurs IT4 et IT6 sont envoyés sur un amplificateur opérationnel A46 qui calcule la somme des courants -Isu-Isv notée Ici. Les signaux de sortie Isv et Isw des amplificateurs IT6 et IT2 sont envoyés sur un amplificateur opérationnel A62 qui calcule la somme des courants - Isv-Isw notée lai.

Le signal de sortie Isu de l'amplificateur IT4 (branche "directe") et le signal de sortie lai=-lsv-lsw de l'amplificateur A62 (branche "indirecte") sont envoyés sur un commutateur Cu qui commute l'un ou l'autre de ces signaux sur un circuit bloqueur Bu. Par ailleurs, le signal de sortie Isw de l'amplificateur IT2 (branche "directe") et le signal de sortie Ici=-lsu-lsv de l'amplificateur A46 (branche "indirecte") sont envoyés sur un commutateur Cw qui commute l'un ou l'autre de ces signaux sur un circuit bloqueur Bw.

La fonction des circuits bloqueurs Bu et Bw est de maintenir les courants appliqués aux commutateurs Cu et Cw à la dernière valeur jusqu'à la prochaine commande des commutateurs Cu et Cw. Des amplificateurs de sortie Au et Aw reçoivent les signaux des bloqueurs Bu et Bw et réalisent la mise à niveau finale en fournissant en sortie des signaux Ia* et Ic*. Ces signaux Ia* et Ic* sont envoyés aux convertisseurs analogiques-numériques du microcontrôleur 3.

Les courants Ia*, Ib*, Ic* représentent les courants reconstruits, les courants réels dans les phases étant notés Ia, Ib, Ic, Ia* est le courant reconstruit en fonction de Isu et Iai. Ic* est le courant reconstruit en fonction de Isw et Ici.

On notera dès à présent que le système ne reconstruit que les deux courants de phase Ia* et Ic*, le troisième courant étant reconstruit dans le microcontrôleur 3. En variante, au lieu de reconstruire uniquement Ia* et Ic*, on aurait pu reconstruire Ib*.

Les commutateurs Cu et Cw qui contrôlent la connexion de la branche directe ou indirecte du circuit de reconstruction 5 sont pilotés par un circuit logique de commande 52 représenté schématiquement à la figure 3.

On considère que la commande d'un transistor T4 ou T6 ou T2 est au niveau logique 1 lorsque ledit transistor est passant et que la même commande est au niveau logique 0 lorsque ledit transistor est bloqué.

Le circuit logique 52 est commandé par les commandes des transistors T4, T6 et T2. Il comprend trois circuits décaleurs D4, D6, D2 qui décalent le front montant des commandes des transistors T4, T6, T2, le front descendant étant synchrone avec la commande du transistor. Les sorties de ces décaleurs sont appelées respectivement T4t, T6t et T2t. T4t est la commande de Cu pour la branche directe qui reconstruit le courant la∗. T2t est la commande de Cw pour la branche directe qui reconstruit le courant Ic*.

Les commandes T4t, T6t et T2t sont traitées dans un circuit logique 53 qui délivre des commandes T4t, CBIU, T2t et CBIW.

La commande CBIU est active lorsque l'on n'a pas de signal T4t et que les signaux T6t et T2t sont au niveau logique 1. Alors le circuit 53 active la commande indirecte de Cu pour reconstruire le courant la∗. La commande CBIW est active lorsque l'on n'a pas de signal T2t et que les signaux T4t et T6t sont au niveau logique 1. Alors le circuit 53 active la commande indirecte de Cw pour reconstruire le courant Ic*.

Si aucun des transistors n'est commandé alors on place les commandes T4t et T2t au niveau 1 afin de rendre les signaux Ia* et Ic* stables.

Un circuit 54 envoie au microcontrôleur 3 deux bits BEA et BEC qui signalent à ce microcontrôleur 3 l'état dans lequel se trouve le reconstructeur pour chacune des phases mesurées. Il comporte deux éléments bistables qui changent de sens lorsque le circuit logique 52 commute de la branche directe à la branche. Le microcontrôleur 3 lit ces bits BEA et BEC dès qu'une mesure de courant Ia* ou Ic* est effectuée par ses convertisseurs analogiques/numériques afin de corriger l'"offset" (décalage) relatif soit à la branche directe soit à la branche indirecte. Un étalonnage permet de déterminer ces valeurs d"offset".

Le fonctionnement du dispositif va maintenant être décrit.

A la mise sous tension du convertisseur de fréquence, on procède à l'étalonnage pour tenir compte du fait que les signaux issus d'une branche directe ou d'une branche indirecte sont traités par des chaînes d'amplificateurs différentes, les "offsets" des amplificateurs (équilibrage des amplificateurs) étant différents. Quatre valeurs d"offset" relatives aux branches directe et indirecte, pour les deux phases, sont stockées dans la mémoire du dispositif. L'une de ces valeurs est ajoutée à la mesure du courant Ia* ou Ic*, en fonction de la valeur du bit d'état correspondant BEA ou BEC du reconstructeur 5.

Lorsqu'un couple transistor-diode d'une branche basse, T4-D4 par exemple, est coupé, et après le retard inter-voies, le couple correspondant voie haute, T1-D1 dans ce cas, est commandé. Le reconstructeur est alors aveugle et le courant est bloqué par les bloqueurs Bu et Bw au niveau atteint juste avant la coupure de la voie basse.

Dans certains cas, le courant est nul dans la branche basse de l'onduleur pendant plusieurs pas de MLI. La branche directe du reconstructeur est inutilisable et la branche indirecte du reconstructeur est alors utilisée. Ces cas se produisent à haute vitesse, lorsque le courant est positif dans la phase considérée et que le transistor T1, T3, T5 de la voie haute est commandé.

Lorsque le courant dans la phase U est positif pendant plusieurs pas de MLI, les deux autres phases sont obligatoirement négatives et il est possible de remplacer le courant Isu par le courant Iai= -Isv-Isw. Lorsque le courant dans la phase W est positif pendant plusieurs pas de MLI, les deux autres phases sont obligatoirement négatives et il est possible de remplacer le courant Isw par le courant Ici= -Isu-Isv.

A chaque fois que la commande T4t est active, le circuit de reconstruction 5 fournit au microcontrôleur 3, le courant issu de la branche directe U. A chaque fois que la commande CBIU est active, le circuit de reconstruction 5 fournit au microcontrôleur 3 le signal issu de la branche indirecte à savoir lai=-lsv-lsw.

A chaque fois que la commande T2t est active, le circuit de reconstruction 5 fournit au microcontrôleur 3 le courant issu de la branche directe W. A chaque fois que la commande CBIW est active, le circuit de reconstruction 5 fournit au microcontrôleur 3 le signal issu de la branche indirecte à savoir Ici= -Isu-Isv.

On a vu plus haut que la valeur de remplacement Iai= -Isv-Isw est délivrée à la sortie de l'amplificateur A62 (branche indirecte) et que la valeur de remplacement Ici= -Isu -Isv est délivrée à la sortie de l'amplificateur A46 (branche indirecte).

Le tableau ci-dessous résume, en fonction de l'état des transistors des branches basses T4, T6, T2, le type de reconstruction utilisé (Branche "directe " ou Branche "indirecte") et le courant envoyé au microcontrôleur 3.

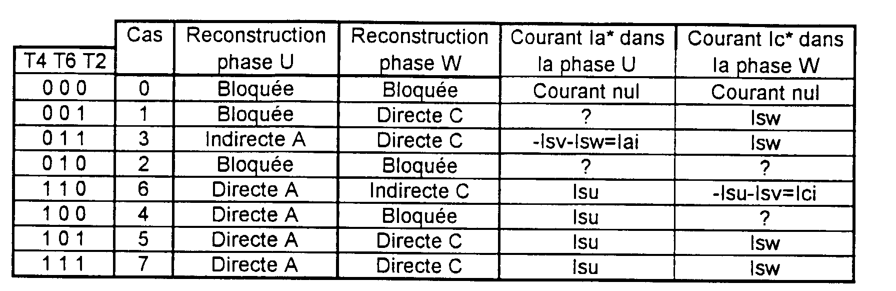

La figure 4 illustre le fonctionnement du reconstructeur sur la phase U et représente le courant réel la et le courant "reconstruit" la∗.

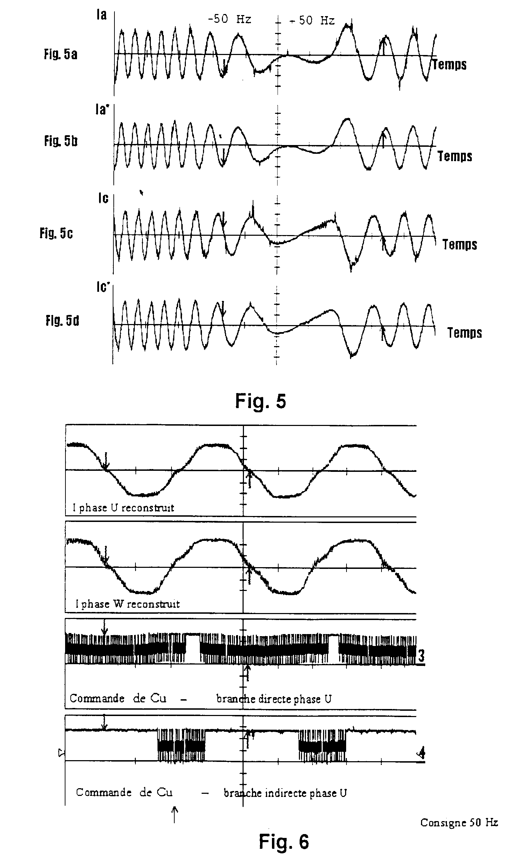

Si l'on se réfère à la figure 5, on note que les deux courants réels Ia et Ic mesurés directement dans les phases moteur U et W et les deux courants reconstruits Ia* et Ic* dans les mêmes phases U et W sont très semblables.

La figure 6 montre que la commande du commutateur de la branche indirecte complète la commande du commutateur de la branche directe lorsque la commande de la branche directe est impossible.

Il est bien entendu que l'on peut sans sortir du cadre de l'invention imaginer des variantes et des perfectionnements de détail et de même envisager l'emploi de moyens équivalents.

## Revendications

1. Dispositif de mesure de courants dans un onduleur (1) alimenté par une source de tension continué et pourvu de six interrupteurs (T1, T2, T3, T4, T5, T6) associés à des diodes (D1, D2, D3, D4, D5, D6) et pilotés par un circuit de commande (2) et un microcontrôleur (3) et pourvu de capteurs de courant (Su, Sv, Sw) disposés chacun entre l'interrupteur et la diode associée d'une voie basse et d'autre part le conducteur de retour de la source de tension continue et fournissant des signaux dit "direct" (Isu, Isv, Isw) en phase avec les courants (Ia, Ib, Ic) sortant de l'onduleur, caractérisé par le fait qu'il comporte des moyens (A46, A62) pour calculer un signal de remplacement (lai) dit "indirect" égal à la somme de deux signaux "directs" (-Isu et -Isw) et un second signal de remplacement (Ici) dit "indirect" égal est à la somme de deux signaux "directs" (-Isu et -Isw) et des moyens (Cu, Cw) pour commuter soit un signal "direct" (Isu ou Isw) soit un signal de remplacement "indirect" (lai ou Ici) de manière à envoyer au microcontrôleur (3) deux signaux reconstruits des courants de deux phases (Ia* et Ic*) composés chacun soit du signal "direct" (Isu ou Isw) soit, pendant les pas de MLI où le transistor de la branche basse n'est pas commandé, du signal de remplacement "indirect" (lai, Ici).

2. Dispositif selon la revendication 1, caractérisé par le fait que les moyens pour commuter les signaux "directs" ou les signaux "indirects" sont constitués par des commutateurs (Cu, Cw) pilotés par un circuit logique (52) recevant les commandes des transistors (T4, T6, T2) des voies basses.

3. Dispositif selon l'une quelconque des revendications précédentes, caractérisé par le fait qu'il comporte un circuit (53) envoyant au microcontrôleur (3) des signaux d'information (BEA, BEC) sur la branche directe ou indirecte.

4. Dispositif selon l'une quelconque des revendications précédentes, caractérisé par le fait qu'il comporte des bloqueurs (Bu, Bw) à la suite des commutateurs (Cu, Cw).
